# EUROPEAN PATENT APPLICATION

(11) **EP 1 593 297 A1**
(43) Date of publication of application: **09.11.2005**
(21) Application number: 05252753.8
(22) Date of filing: 04.05.2005
(51) Int. Cl.: A01D 34/52, A01D 34/62

(54) **Bedknife assembly for a mower**

(30) Priority: 04.05.2004 US 568123 P; 04.05.2004 US 838862; 10.01.2005 EP 05250076; 28.04.2005 US 116766
(71) Applicant: TEXTRON INC., Providence, Rhode Island 02903 (US)
(72) Inventor: Mahan, Jonathan Dohme F, Charlotte, 28273 North Carolina (US); Moinikunta, Vivik, Charlotte, 28277 North Carolina (US); Berkeley, James E., Pineville, 28134 North Carolina (US)
(74) Representative: Moir, Michael Christopher

(57) **Abstract**

A reel mower assembly including a reel mower (10) rotatably mounted to a frame (16), a drive (15) operative to rotate the reel (20) about a reel axis (RA), and at least one backing (32) mounted to the frame (16). The reel mower further includes a bedknife retainer (33) fastened to the backing (32) in an operating position, a bedknife (34) interposed between the backing (32) and the bedknife retainer (33) such that the bedknife (34) is oriented in cutting relationship with the reel (20), and an engagement device (35) operative to prevent sliding movement of the bedknife (34) with respect to the backing (32). Alternatively, the reel mower assembly (20) includes a bedknife retainer (33) fastened to the backing (32) in an operating position, and a bedknife (46A,46B) carried by the bedknife retainer (33).

## Description

### CROSS-REFERENCE TO RELATED APPLICATIONS

This application claims the benefit of U.S. Provisional Application No. 60/568,123 filed on May 4, 2004. The disclosure of the above application is incorporated herein by reference.

### FIELD OF THE INVENTION

The present application relates to a reel mower, and more particularly, to a disposable bedknife for a reel mower.

### BACKGROUND OF THE INVENTION

Reel mowers use a scissoring action to shear grass and like foliage, rather than tearing the leaves. Such reel mowers are more expensive and require more maintenance than rotary mowers, however, they are preferred by golf courses and the like where appearance and healthy grass are important. Individual reel mower assemblies are quite narrow, and consequently, reel mower units commonly comprise a plurality of side-by-side reel mower assemblies.

In a typical reel mower assembly, an attachment member, commonly called a bed bar, is attached to the apparatus in rigid relationship to the reel, and a removable bedknife is attached to the bed bar. The reel, bed bar, and bedknife are oriented such that the bedknife is held parallel to the reel axis, and in close proximity to the reel knives so that the sheering action is achieved between the reel knives and the bedknife. Typically, an adjustment mechanism is provided to allow movement of the bed bar relative to the reel so that the bedknife can be moved into proper relationship with the rotating reel knives.

Conventionally, the bedknife is attached to the bed bar with a plurality of screws placed through holes in the bedknife, and engaging threaded holes in the bed bar. A reel mower unit, such as is used by golf courses or the like, may comprise eight or ten individual reel mower assemblies. Changing a bedknife on a mower is a quite lengthy process. Since the bedknife is typically attached to the underside of the apparatus, the mower must be raised sufficiently, or be partially disassembled, to allow access to the underside of the mower. Also, once the bedknife is removed, new edges must be grounded onto it. Thus, changing bedknives on such a mower unit requires significant labor time and corresponding downtime. Eliminating the step of grinding new cutting edges significantly reduces the downtime associated with changing bedknives.

A simple way to eliminate the step of grinding new cutting edges is to create a disposable bedknife. An even greater advantage would be to form two cutting edges on each bedknife, creating a double-ended bedknife. With a double-ended bedknife, as one edge dulls, the bedknife is oriented to operationally place the second bedknife into operation, thus eliminating the necessity of grinding edges. Once both edges are dulled, the entire bedknife is discarded and replaced with a new bedknife.

Therefore, in some instances, it is desirable to provide an improved reel mower assembly by introducing an improved bedknife that can be attached to existing reel mower assemblies, and allows for quick changing of the bedknife with significantly reduced labor and downtime.

### SUMMARY OF THE INVENTION

An aspect of the present invention is provided in Claim 1. Preferred features of this aspect are provided in the dependent claims. Another aspect of the present invention provides a reel mower assembly comprising a reel mower rotatably mounted to a frame, a drive operative to rotate the reel about a reel axis, at least one backing mounted to the frame, a bedknife retainer fastened to the backing in an operating position, a bedknife interposed between the backing and the bedknife retainer such that the bedknife is oriented in cutting relationship with the reel, and an engagement device operative to prevent sliding movement of the bedknife with respect to the backing.

The present application further relates to a reel mower assembly comprising a frame, a primary mover attached to the frame for displacing the mower, a power source supported by the frame for operating the primary mover, a reel mower rotatably mounted to the frame, a drive operative to rotate the reel about a reel axis, at least one backing mounted to the frame, a bedknife retainer fastened to the backing in an operating position, and a bedknife interposed between the backing and the bedknife retainer such that the bedknife is oriented in cutting relationship with the reel.

Various embodiments include a reel mower assembly comprising a reel mower rotatably mounted to a frame, a drive operative to rotate the reel about a reel axis, at least one backing mounted to the frame, a bedknife retainer fastened to the backing in an operating position, a bedknife carried by the bedknife retainer, and an engagement device operative to prevent sliding movement of the retainer with respect to the backing.

The present application also relates to a reel mower assembly comprising a frame, a primary mover attached to the frame for displacing the mower, a power source supported by the frame for operating the primary mover, a reel mower rotatably mounted to the frame, a drive operative to rotate the reel about a reel axis, at least one backing mounted to the frame, a bedknife retainer fastened to the backing in an operating position, and a bedknife carried by the bedknife retainer.

Further areas of applicability of the various embodiments will become apparent from the detailed description provided hereinafter. It should be understood that the detailed description and specific examples, while indicating various preferred embodiments of the invention, are intended for purposes of illustration only and are not intended to limit the scope of the present application.

### BRIEF DESCRIPTION OF THE DRAWINGS

The present application will become more fully understood from the detailed description and the accompanying drawings, wherein:
FIG. 1 is an exploded perspective view of a walk-behind reel mower constructed in accordance with the teachings of various embodiments;
FIG. 2 is an exploded perspective view of a reel mower assembly constructed in accordance with the teachings of various embodiments;
FIG. 3 is a perspective view of the top of a bed bar of some embodiments;
FIG. 4 is a perspective view of the bottom of a bed bar of some embodiments;
FIG. 5 is a perspective view of a bedknife for attachment to the bed bar of FIG. 3;
FIG. 6 is a schematic view of the bedknife of FIG. 5 in the operating position on the bed bar of FIG. 3;
FIG. 7 is a schematic view of an alternative bedknife in the operating position on the bed bar of FIG. 3;
FIG. 8 is a plan view of a bed knife according to a first method of manufacture;
FIG. 9 is a cross sectional view of the bed knife of FIG. 8;
FIG. 10 is a plan view of the blank used in forming the bed knife of FIG. 8;
FIG. 11 is a plan view of the bed knife of FIG. 8 following multiple grinding operations;
FIG. 12 is a cross sectional view of the bed knife of FIG. 11;
FIG. 13 is a plan view of the bed knife of FIG. 11 following the final grinding operation;
FIG. 14 is a cross sectional view of the bed knife of FIG. 13;
FIG. 15 is a plan view of a bed knife according to a second method of manufacture; and
FIG. 16 is a cross sectional view of the bed knife of FIG. 15.

### DETAILED DESCRIPTION OF VARIOUS EMBODIMENTS

The following description of the various embodiments is merely exemplary in nature and is in no way intended to limit the embodiments, applications, or uses described herein.

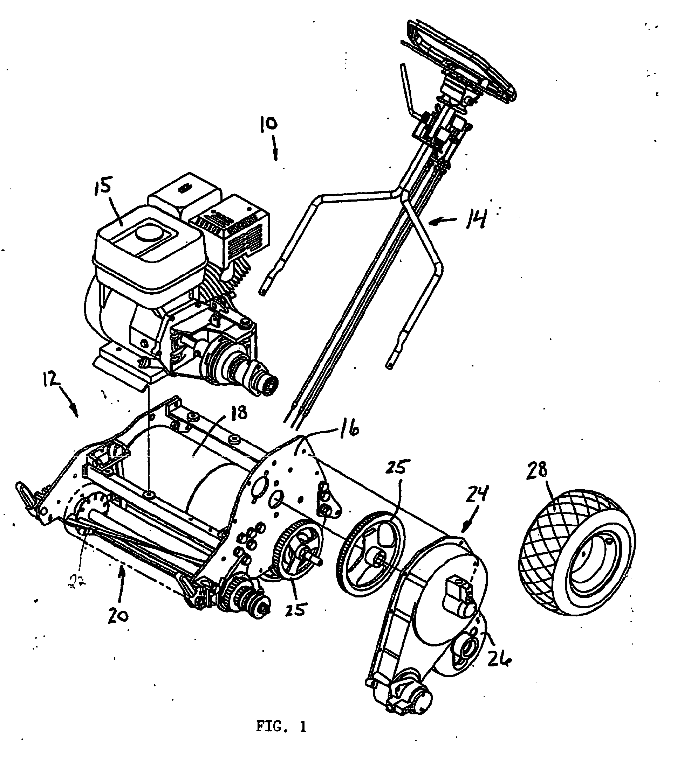

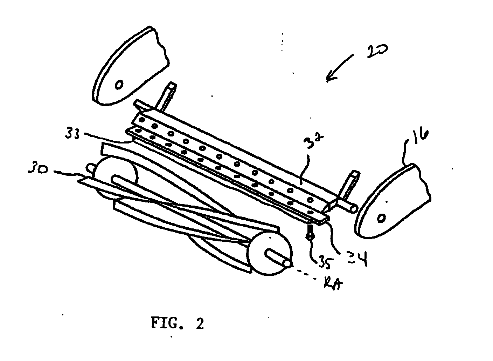

FIG. 1 shows the basic components of a mower 10 constructed in accordance with the various embodiments. Mower 10 is shown as a walk-behind mower; however, mower 10 can be any type of greensmower. Mower 10 includes cutting unit 12, which comprises a power source or engine 15 coupled to a frame 16, and a handle 14 coupled to frame 16. A traction roller 18 is rotatably coupled to frame 16 and drivingly connected to engine 15. Cutting unit 12 further comprises a reel mower assembly 20 (see FIG. 2). Reel 20 includes blades 22 rotatably mounted to frame 16 and is selectively driven by engine 15. A transmission 24 includes a plurality of sprockets 25 selectively transferring rotational output torque of engine 15 to traction roller 18. Transmission 24 includes a clutch 26 positioned intermediate engine 15 and transmission 24. Clutch 26 is operable in an engaged mode and a disengaged mode for selectively transferring power from engine 15 to traction roller 18. Wheels 28 are coupled to traction roller 18 and are also selectively driven by engine 15 to provide motive force for translating walk-behind greensmower 10 along the ground.

FIG. 2 schematically illustrates the major parts of reel mower assembly 20 comprising a mower reel 30 rotatably mounted to frame 16. Reel mower assembly 20 is commonly found on various types of mowers, including riding mowers, and walk-behind mowers. A drive is operative to rotate reel 30 about a reel axis RA. A bed bar 32 attaches to frame 16, and bedknife retainer 33 is fastened to bed bar 32. Any type of fastener, such as threaded screws 35, can be used to attach bedknife retainer 33 to bed bar 32. Bedknife 34 is interposed between bedknife retainer 33 and bed bar 32. Typically, reel 30 further includes an adjustment mechanism to vary the position of bed bar 32 with respect to reel 30 in order to provide the proper cutting relationship between bedknife 34 and reel 30.

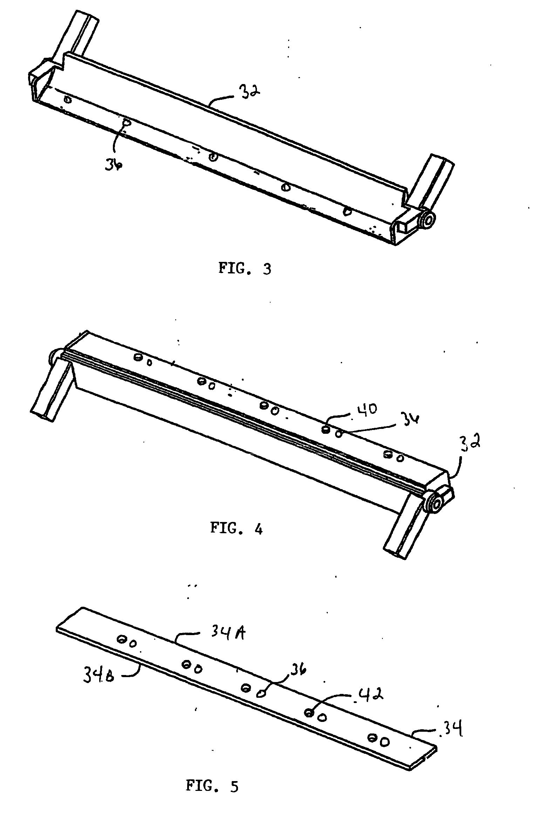

FIG. 3 and 4 show an embodiment of bed bar 32 in accordance with the various embodiments. Bed bar 32 includes a plurality of holes 36 to allow screws 35 to connect bed bar 32 to bedknife retainer 33. Bedknife 34 is fastened to bed bar 32 in an operating position through the use of locating pins 40.

FIG. 5 illustrates a bedknife 34 constructed in accordance with various embodiments. Bedknife 34 includes a first cutting edge 34A and a second cutting edge 34B. Cutting edges 34A and 34B are formed on opposite sides of bedknife 34, allowing one cutting edge 34A to be in operation at any time. As cutting edge 34A dulls, the orientation of bedknife 34 can be reversed to allow the operation of the other cutting edge 34B. After both cutting edges 34A and 34B are dulled, bedknife 34 is easily discarded, and replaceable. Furthermore, bedknife 34 includes notches 42 for engaging locating pins 40 of bed bar 32. In some embodiments, notches 42 and holes 36 alternate along bedknife 34, however, any arrangement of notches 42 for engaging locating pins 40 and holes 36 for engaging screws 35 that operationally allows bedknife 34 to be double-ended is acceptable. Holes 36, locating pins 40, and notches 42 are situated to allow cutting edge 34A to be replaced with cutting edge 34B or vice versa. Aligning locating pins 40 with notches 42 ensures that bedknife 34 is located in the proper position relative to bed bar 32.

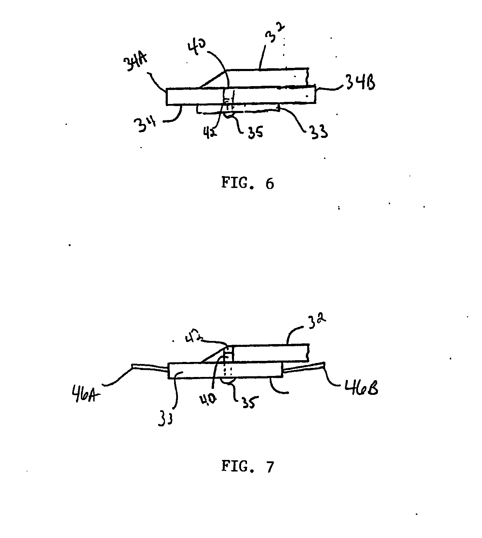

FIG. 6 illustrates the attachment of bedknife 34 to bed bar 32, as well as the engagement of locating pins 40 and notches 42. Bedknife retainer 33 is fastened to the bottom of bedknife 34 through screws 35 or some other fastener. This is to provide additional force to prevent bedknife 34 from displacing relative to bed bar 32. Any displacement of bedknife 34 to bed bar 32 hinders mower 10 from trimming the grass at the proper length. The length of the grass is proportional to the proper thickness of bedknife retainer 33 that allows mower 10 to trim the grass effectively. A thick bedknife retainer 33 is used to trim tall grass, while a thinner bedknife retainer 33 is used to trim short grass. A thicker bedknife retainer 33 provides more stability to bedknife 34 by keeping it properly oriented in the cutting position while cutting long or thick grass. Since shorter grass does not displace bedknife 34 with respect to bed bar 32 as easily, a thinner bedknife retainer 33 is used. Failure to use the proper bedknife retainer 33 can result in bedknife 34 becoming misaligned relative to bed bar 32, which prevents mower 10 from properly trimming the grass.

FIG. 7 presents an alternative bedknife configuration in accordance with some embodiments. FIG. 7 includes bed bar 32 with locating pins 40 to engage notches 42 formed on bedknife retainer 33. Aligning locating pins 40 and notches 42 ensures that bedknife retainer 33 is properly oriented relative to bed bar 32. Additionally, screws 35 fasten bedknife retainer 33 to bed bar 32. Unlike some embodiments, bedknife 34 is not interposed between bedknife retainer 33 and bed bar 32. Instead, a first bedknife 46A is bonded to one side of bedknife retainer 33, and a second bedknife 46B is bonded to the opposite side of bedknife retainer 33. First and second bedknives 46A and 46B are bonded to bedknife retainer 33 through any bonding method, such as gluing or staking.

As previously stated, first and second bed knives 46A and 46B are bonded to bedknife retainer 33. Only one bedknife 46A is sufficient, however, in a double-ended configuration, if first bedknife 46A dulls, bedknife retainer 33 can be reversed to operationally orient second bedknife 46B to provide a second cutting edge. This reduces time spent grinding new cutting edges.

Typically, bedknife retainer 33 is formed from steel, and first and second bed knives 46A and 46B are formed from a more flexible material, such as tempered spring steel. Forming bedknife 34 illustrated in FIG. 6 and 7 of a more flexible material is less expensive than forming bedknife 34 of a firmer material. Due to the reduced cost of bedknife 34, discarding bedknife 34 after cutting edges 34A and 34B after they are dulled is not unreasonable. Ultimately, double-ended bedknife 34 formed of a more flexible material reduces the cost and time related to replacing bedknives 34 by eliminating the step of grinding cutting edges.

Various embodiments could be practiced in a number of fashions including by manufacturing new reel cutting assemblies in accordance with some embodiments, or alternatively, by producing a retrofit bed bar or support frame kit which would allow the magnetic blade attachment of the present invention to be implemented on an existing mower.

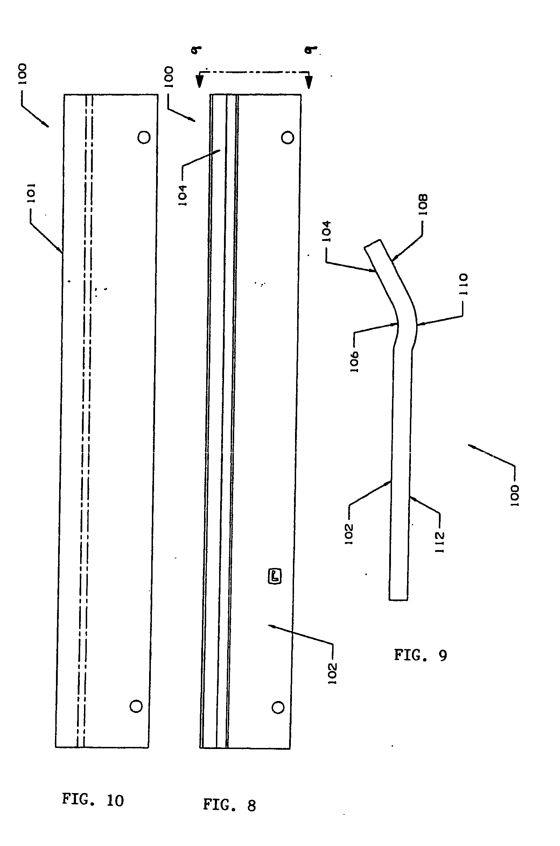

Additionally, magnetic bed knife 18 of various embodiments could be manufactured according to various manufacturing processes. More particularly, as seen in FIGS. 8-14, bed knife 18 may be made of carbon steel, specifically AISI 1566 Hot Rolled Pickled and Oiled steel, which is generally referenced at numeral 100. Carbon steel bed knife 100, like bed knife 18, is adapted to be magnetically held against magnets 20 in an operating position on bed bar 16 as illustrated in FIG. 6 such that bed knife 100 is oriented in cutting relationship with reel 2 in the same fashion as bed knife 18.

With particular reference to FIGS. 8-14, the manufacturing steps of carbon steel bed knife 100 will now be discussed in detail. A generally planar blank 101 is first cut to length. Planar blank 101 is then fed through a stamping or pressing machine that first flattens and straightens planar blank 101 and then imparts a bending force upon the blank. Although this shape can vary among reel mowers, the present shape of bed knife 100 includes a generally planar mounting portion 102 and an upturned cutting portion 104. As best seen in FIG. 9, upturned cutting portion 104 initially includes a radius portion 106 interconnecting a distal end 108 with mounting portion 102. Specifically, as a result of the stamping process used to form carbon steel, radius portion 106 includes an outer surface 110 that, as seen in FIG. 9, extends below a lower surface 112 of mounting portion 102. As should be appreciated by one skilled in the art, this condition of outer surface 110 extending below lower surface 112 is undesirable as it may impede proper turf cutting and/or may contact the ground surface. Furthermore, this condition may further limit the reel mower's minimum cutting height. Accordingly, it is preferable to grind off this outer surface 110 to define a generally unobstructed lower surface.

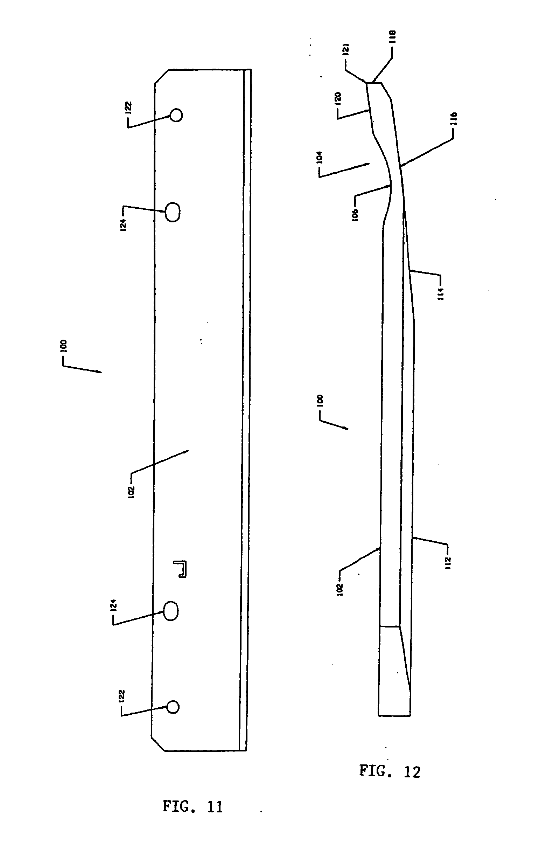

As best seen in FIGS. 11 and 12, bed knife 100 is illustrated following completion of a series of grinding operations sufficient to remove outer surface 110 and define a plurality of faces to create a final desired shape. Specifically, as seen in FIG. 12, bed knife 100 includes a tournament cut face 114 extending upwardly from lower surface 112 of mounting portion 102. Preferably, tournament cut face 114 extends upwardly from lower surface 112 at a relative angle of about between 3 degrees to 8 degrees, such as 5 degrees. Tournament cut face 114 transitions into a super tournament cut face 116 that extends further upwardly at a greater inclination of about between 5 degrees to 15 degrees, such as 8 degrees relative to lower surface 112. Bed knife 100 includes a front face 118, which is generally perpendicular, such as at about 90 degrees relative to lower surface 112, and a top face 120, which is at in the range of about 5 degrees to 15 degrees about 8 to 10 degrees relative to lower surface 112. Front face 118 and top face 120 intersecting at an edge 121. Tournament cut face 114, super tournament cut face 116, front face 118, and top face 120 are each formed through various grinding operations that requires bed knife 100 to be fed through a milling machine. Following these grinding operations, bed knife 100 is then heat-treated to provide sufficient hardness to reduce the wear of bed knife 100 during operation.

Referring now to FIG. 11, following heat treatment, bed knife 100 further includes a pair of apertures 122 formed through mounting portion 102. This pair of apertures 122 is used during manufacturing to position bed knife 100 during subsequent grinding operations. Additionally, a second pair of apertures 124 is formed through mounting portion 102. This second pair of apertures 124 is sized, similar to holes 28, to receive pegs 26 of bed bar 16.

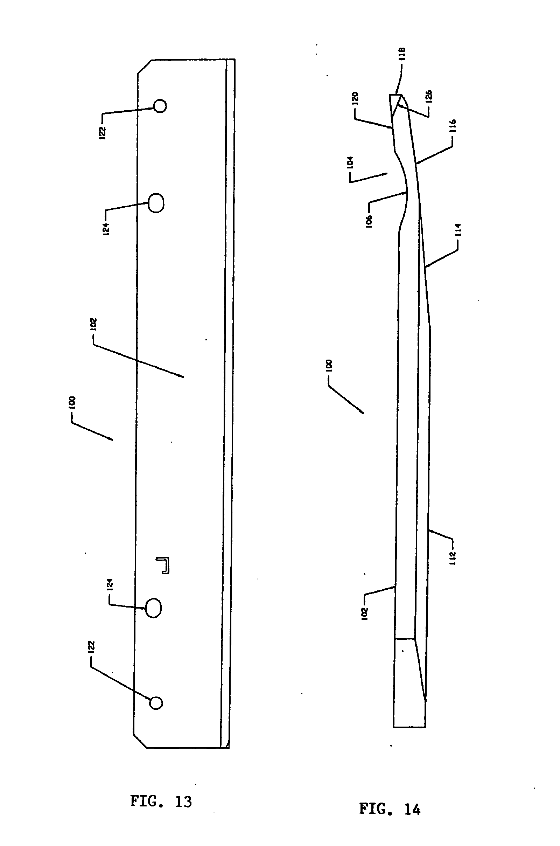

Finally, as seen in FIGS. 13 and 14, a final grind of bed knife 100 is completed. Specifically, through a subsequent grinding operation, following heat treatment, top face 120 is finish ground down such that it is about in the range of 3 degrees to 8 degrees, such as about 5.5 degrees inclined relative to lower surface 112. Similarly, front face 118 is ground down to create a cutting edge 126 in place of edge 121. The particular inclination of cutting edge 126 is dependent upon the desired cutting configuration relative to reel 2.

Although bed knife 100 provides a number of beneficial cutting properties and prolonged wear, the manufacturing thereof may lead to undesirably high costs and complexity. Therefore, various embodiments provide a method of manufacturing the bed knife which is capable of eliminating many of the grinding steps, heat treatment, and complexity of construction.

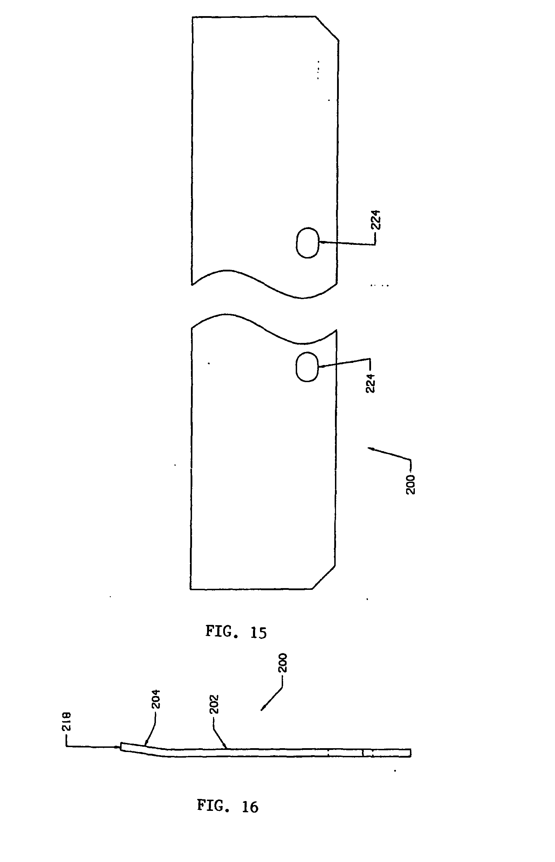

With particular reference to FIGS. 15 and 16, a bed knife 200 is illustrated being manufactured from a simplified process. More particularly, bed knife 200 is made of spring steel, specifically C1095 Scaleless Blue-Tempered Spring Steel, ASTM A682, which is hardened to a minimum Rockwell number of about 47C. Spring steel bed knife 200, like bed knifes 18 and 100, is adapted to be magnetically held against magnets 20 in an operating position on bed bar 16 as illustrated in FIG. 6 such that bed knife 200 is oriented in cutting relationship with reel 2 in the same fashion as bed knife 18.

Still referring to FIGS. 15 and 16, the manufacturing steps of spring steel bed knife 200 will now be discussed in detail. As will be appreciated, the manufacturing steps of spring steel bed knife 200 are dramatically simplified relative to bed knife 100, thereby leading to reduced manufacturing complexity and cost. A generally planar blank (not shown) is fed into a cold roll-forming machine that imparts a bending force upon the blank. Preferably, the planar blank is a roll of spring steel that can quickly and easily be shaped in a continuous, uninterrupted process. As best seen in FIGS. 15 and 16, the blank is shaped through a series of rollers into a desired shape. Due to the nature of spring steel, this shaping process may require one or more bending and over bending operations to produce the desired final shape.

Although the final shape can vary among reel mower designs, the present shape of bed knife 200 includes a generally planar mounting portion 202 and an upturned cutting portion 204. As best seen in FIG. 16, upturned cutting portion 204 extends upwardly from mounting portion 202 at a relative angle of about 9 degrees. As can be appreciated from the figures, unlike bed knife 100 that includes downwardly protruding outer surface 110 of radius portion 106 caused during the stamping process, the cold roll forming process of the various embodiments does not create such effect, thereby eliminating the need to grind tournament cut face 114 and super tournament cut face 116. Therefore, the use of spring steel permits the use of roll forming rather than stamping, which eliminates a number of grinding operations, but for a final grind of front face 218 to define a cutting surface.

As seen in FIG. 15, bed knife 200 further includes a pair of apertures 224 are formed through mounting portion 202. This pair of apertures 224 is sized, similar to holes 28, to receive pegs 26 of bed bar 16.

Spring steel bed knife 200 provides a number of advantages over conventional screw-on bed knives and, even, bed knife 100. Specifically, bed knife 200, being made of spring steel, enables it to be made according to a simple cold roll forming technique. This technique, which has not been used before to form magnetic bed knives, dramatically simplifies the manufacturing process, thereby eliminating the need for complex flattening, straightening, forming, grinding, and heat-treating operations.

The description of the embodiments described herein is merely exemplary in nature and, thus, variations that do not depart from the gist of the various embodiments are intended to be within the scope of this application. Such variations are not to be regarded as a departure from the spirit and scope of the subject application.

Each feature disclosed in this specification (which term includes the claims) and/or shown in the drawings may be incorporated in the invention independently of other disclosed and/or illustrated features.

The text of the abstract filed herewith is repeated here as part of the specification.

A reel mower assembly including a reel mower rotatably mounted to a frame, a drive operative to rotate the reel about a reel axis, and at least one backing mounted to the frame. The reel mower further includes a bedknife retainer fastened to the backing in an operating position, a bedknife interposed between the backing and the bedknife retainer such that the bedknife is oriented in cutting relationship with the reel, and an engagement device operative to prevent sliding movement of the bedknife with respect to the backing. Alternatively, the reel mower assembly includes a bedknife retainer fastened to the backing in an operating position, and a bedknife carried by the bedknife retainer.

## Claims

1. A bed knife assembly for a reel mower comprising:
at least one backing for mounting to a frame of the mower;
a bedknife retainer fastened to the backing in an operating position; and
a bedknife carried or located by the bedknife retainer such that in operation the bedknife retainer is disposed in cutting relationship with the reel.

2. The assembly of Claim 1 or 2 comprising an engagement device operative to prevent sliding movement of the bedknife with respect to the backing.

3. The assembly of Claim 2 wherein the engagement device comprises a plurality of locating members formed on the backing.

4. The assembly of Claim 3 wherein the engagement device comprises a plurality of apertures formed in the retainer for engaging the locating members with the backing.

5. The assembly of any preceding claim further comprising a fastener for attaching the retainer to the backing.

6. The assembly of Claim 5 wherein the fastener is a threaded fastener.

7. The assembly of any preceding claim wherein the retainer is selected from a plurality of retainers of varying thicknesses.

8. The assembly of any previous claim wherein the bedknife is carried by the bedknife retainer.

9. The assembly of Claim 8 comprising a second bedknife carried by the retainer, the second bedknife carried opposite the first bedknife.

10. The assembly of Claim 8 or 9 wherein the or each bedknife is glued to the retainer.

11. The assembly of any of Claims 8 to 10 wherein the or each bedknife is staked to the retainer.

12. The assembly of any preceding Claim wherein the or each bedknife has a first side and a second side, each side arranged to provide a cutting function, and wherein the or each bedknife may be oriented so that one of the first and second sides provides the cutting function.

13. The assembly of any of Claims 1 to 7 wherein the bedknife is interposed between the backing and the bedknife retainer.

14. The assembly of any preceding claim wherein the or each bedknife is formed of a material more flexible than the retainer.

15. The assembly of any preceding claim wherein the or each bedknife is tempered spring steel.

16. The assembly of any preceding claim wherein the or each bedknife is replaceable.

17. A reel mower comprising:
a reel mower rotatably mounted to a frame;
a drive operative to rotate the reel about a reel axis;
at least one backing mounted to the frame; and
the bedknife assembly of any preceding claim.

18. The reel mower of Claim 17 comprising:
the frame;
a prime mover attached to the frame for propelling the mower; and
a power source supported by the frame for operating the prime mover.

19. The reel mower of Claims 17 or 18 being either one of a riding or a walk-behind mower.
